# FASCICULE DE BREVET EUROPEEN

(11) **EP 3 783 760 B1**
(45) Date de publication et mention de la délivrance du brevet: **12.07.2023**
(21) Numéro de dépôt: 20187699.2
(22) Date de dépôt: 24.07.2020
(51) Int. Cl.: H02G 1/02, H02G 7/00

(54) **DISPOSITIF ET PROCÉDÉ DE POSE D'UNE BALISE AVIFAUNE SUR UN CÂBLE AÉRIEN**
VORRICHTUNG UND VERFAHREN ZUM ANBRINGEN EINER OPTISCHEN VOGELABWEHR AUF EINER FREILEITUNG
DEVICE AND METHOD FOR INSTALLING AN AVIFAUNA BEACON ON AN OVERHEAD CABLE

(30) Priorité: 20.08.2019 FR 1909294
(43) Date de publication de la demande: 24.02.2021
(73) Titulaire: Enedis, 92079 Paris La Defense Cedex (FR)
(72) Inventeur: BOUQUIN, Pierrig, 56400 BRECH (FR); OGRÉ, Bertrand, 56660 SAINT JEAN BRÉVELAY (FR)
(74) Mandataire: Regimbeau

(56) Documents cités:
- CN-B- 105 552 785
- Rick Harness: "Using an Unmanned Aerial Vehicle to Install Wire Markers to Mitigate Bird Collisions ENV-VISION: Environmental Vision", , 25 mai 2016 (2016-05-25), XP055593823, Extrait de l'Internet: URL:https://epristorage.blob.core.windows. net/documents/Rick%20Harness_EDM%20Interna tional.pdf [extrait le 2019-06-04]
- SCOTT LOBERMEIER ET AL: "Mitigating avian collision with power lines: a proof of concept for installation of line markers via unmanned aerial vehicle", JOURNAL OF UNMANNED VEHICLE SYSTEMS, vol. 3, no. 4, 1 décembre 2015 (2015-12-01), pages 252-258, XP055562675, ISSN: 2291-3467, DOI: 10.1139/juvs-2015-0009

## Description

### DOMAINE DE L'INVENTION

Le domaine de l'invention est celui de la protection des oiseaux vis-à-vis des risques présentés par des câbles aériens, notamment des câbles de réseaux de distribution électrique.

L'invention s'applique notamment mais non exclusivement à la protection avifaune vis-à-vis de lignes électriques HTA 20 000 volts sous tension.

### ETAT DE LA TECHNIQUE

On a déjà présenté de nombreuses propositions pour la protection des oiseaux vis-à-vis des risques occasionnés par des câbles aériens.

Il a notamment été proposé différents types de balises avifaunes destinées à être disposées et réparties le long des câbles aériens.

On a ainsi proposé par exemple de disposer des spirales environ tous les 30 mètres sur les lignes électriques. De telles balises en spirale ont pour fonction d'exagérer la visibilité des lignes au sens des oiseaux afin de réduire le risque de percussion et d'électrocution en plein vol.

Ces balises en spirale agissent notamment en générant du bruit, par exemple un sifflement sous l'effet du vent.

On a également proposé des balises de protection avifaune comprenant des plaques ou bandes par exemple colorées, réfléchissantes, ou lumineuses liées à une pince adaptée pour être fixée sur les câbles aériens afin de mieux matérialiser la présence des câbles par les oiseaux.

De telles plaques peuvent comprendre des matériaux luminescents générant par exemple des ultraviolets pour permettre aux oiseaux de voir les balises en basse lumière et dans le brouillard.

Un exemple d'une telle balise est commercialisé notamment sous la dénomination FIREFLY.

Le problème posé par de telles balises est souvent celui de la fixation des pinces sur les câbles aériens.

Il est en effet nécessaire de disposer des balises régulièrement et à intervalles relativement rapprochés le long des câbles, par exemple tous les 10 mètres.

On a proposé en particulier de placer les balises sur les câbles aériens à l'aide de nacelles ou de perches.

Cependant, cette technique présente des difficultés quant à l'accès lorsque les câbles aériens à protéger sont disposés par exemple sur des zones marécageuses, vallonnées ou en montagne, ou encore lorsque les lignes sont au-dessus d'un cours d'eau ou d'un lac.

Il a également été proposé d'installer les balises du type précité équipées d'une pince, à l'aide d'hélicoptères ou de drones, en particulier dans le document « Using an Unmanned Aerial Vehicle to Install Wire Markers to Mitigate Bird Collisons », par Rick Harness, ou dans le document « Mitigating avian collision with power lines : a proof of concept for installation of line markers via unmanned aerial vehicle », par Scott Lobermeier *et al.*

Cependant, toutes ces techniques ne donnent pas totalement satisfaction, notamment lorsque les lignes à protéger sont des lignes électriques sous tension.

En l'état de la technique, l'homme de l'art est ainsi contraint le plus souvent de démonter les lignes électriques pour la pose des balises, puis de remonter les lignes.

Tout ceci génère des coûts conséquents.

Par ailleurs, on constate souvent que les drones manquent de puissance pour assurer le positionnement des balises et assurer correctement la fermeture des pinces.

L'effort demandé aux drones pour solliciter la pince contre le câble afin d'assurer la fermeture de la pince, entraîne de forts risques de déséquilibre du drone.

Différentes tentatives ont déjà été proposées pour faire évoluer les systèmes de pose à base de drones.

Cependant, toutes les techniques jusqu'ici proposées se sont avérées infructueuses.

### EXPOSE DE L'INVENTION

La présente invention a pour but d'améliorer l'état de la technique.

La présente invention a notamment pour but de permettre la pose de systèmes de balises avifaune sur un câble aérien tout en assurant la continuité de la fourniture électrique, c'est-à-dire permettant la pose des balises avifaune sur les lignes électriques sous tension.

D'autres buts auxiliaires de l'invention sont de réduire le coût de pose et de garantir la sécurité du personnel intervenant.

Les buts précités sont atteints dans le cadre de la présente invention grâce à un dispositif de pose d'une balise avifaune sur un câble aérien, selon la revendication 1.

Selon d'autres caractéristiques avantageuses de l'invention :
- le dispositif de pose comprend au moins une palette de commande raccordée à l'actionneur,
- la palette de commande est configurée pour solliciter les mâchoires d'une pince de fixation en position de fermeture,
- le dispositif de pose comprend deux palettes de commande raccordées à des actionneurs respectifs et configurées pour solliciter respectivement l'une des mâchoires d'une pince de fixation en position de fermeture,
- le dispositif comprend au moins un ressort de sollicitation des mâchoires de la pince de fixation et chaque palette est adaptée pour agir sur au moins l'un d'une part du ressort de fermeture de la pince de fixation de la balise avifaune et d'autre part des mâchoires de la pince, de préférence à la fois sur ledit au moins un ressort et sur lesdites mâchoires,
- chaque palette comprend une butée adaptée pour prendre appui sur un élément lié aux mâchoires de la pince de fixation, pour solliciter cette mâchoire en position de fermeture, lorsque le point d'appui entre la butée et ledit élément a franchi un plan passant par les axes de rotation des mâchoires, sous la sollicitation de points d'appui d'au moins un ressort par la palette,
- la butée placée sur chaque palette est configurée pour assurer un centrage de la balise dans le dispositif de pose,
- le dispositif comprend des moyens de centrage par rapport au câble, adaptés pour guider le drone relativement au câble jusqu'à une position relative du drone par rapport au câble dans laquelle l'actionnement du système de fixation de la balise a pour résultat de fixer la balise sur le câble,
- les moyens de centrage sont agencés de sorte que lorsque le drone a atteint la position, le drone se trouve sous le câble,
- les moyens de centrage par rapport au câble comprennent au moins un guide en V ouvert vers le haut,
- de préférence les moyens de centrage par rapport au câble comprennent deux guides en V ouverts vers le haut et disposés sur des extrémités opposées du dispositif,
- le dispositif comprend des moyens de centrage large et des moyens de centrage fin du dispositif sur un câble,
- un moyen de centrage comprend une came arrondie garantissant un chemin de glissement continu sans épaulement pour le câble sur le moyen de centrage,
- un moyen de centrage comprend une came arrondie garantissant que l'interface ne présente pas d'épaulement formant butée au câble,
- le dispositif comprend un moyen de réglage de la position du détecteur de présence,
- le moyen de réglage de la position du détecteur de présence comprend une lumière incurvée,
- le dispositif comprend des moyens de réglage de son centre de gravité, par exemple sous forme de moyens permettant de régler la position d'un boîtier, tel que le boîtier logeant une source d'énergie électrique,
- les moyens de réglage du centre de gravité comprennent des moyens de réglage d'un sous-ensemble de l'interface, par exemple du boîtier de l'alimentation électrique,
- le dispositif comprend des moyens de réglage de la position du détecteur de présence de câble par rapport au drone,
- les moyens de réglage comprennent une lumière incurvée de fixation du détecteur,
- le dispositif comprend des moyens d'adaptation à des câbles présentant un fort dénivelé, constitués d'un montage élastique comportant des moyens élastiques intercalés entre le corps du drone et l'ensemble de pose de la balise pour permettre une inclinaison entre le corps du drone et l'ensemble de pose de la balise,
- le dispositif comprend des moyens élastiques adaptés pour être intercalés entre le drone et la base de l'interface de pose pour permettre une adaptation aux câbles de fort dénivelé,
- le dispositif comprend deux détecteurs de présence de câble permettant notamment de piloter la fermeture d'une pince sur un câble en dénivelé,
- chaque détecteur de présence de câble est adapté pour générer un signal de détection représentatif de la présence et/ou de l'absence du câble, et le module de commande est configuré pour recevoir les signaux de détection et pour générer un signal de commande de l'actionneur pour commander l'actionneur, en fonction des signaux de détection, de telle sorte que l'actionneur actionne le système de fixation de la balise sur le câble, lorsque le câble est détecté à la fois par les deux détecteurs de présence.

La présente invention concerne également un procédé de pose d'une balise avifaune sur un câble aérien selon la revendication 22.

Avantageusement, le procédé de pose d'une balise avifaune sur un câble aérien est opéré sur un câble électrique sous tension.

### DESCRIPTION DES FIGURES

D'autres caractéristiques, buts et avantages de la présente invention apparaîtront à la lecture de la description détaillée qui va suivre, et en regard des dessins annexés, donnés à titre d'exemple non limitatif et sur lesquels :
la figure 1 représente une vue schématique en perspective d'un dispositif conforme à un mode de réalisation de la présente invention comportant un drone, une balise et une interface de pose,
la figure 2 représente de manière séparée les trois éléments de base constitutifs du dispositif de pose de balise avifaune, à savoir : le drone, la balise avifaune et l'interface de pose,
la figure 3 représente une autre vue schématique en perspective du dispositif comportant un drone, une balise et une interface de pose, selon un angle de vue différent de la figure 1,

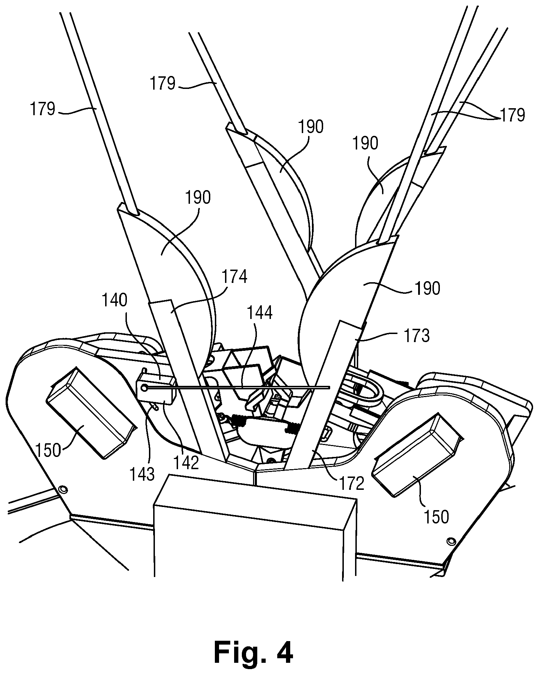

la figure 4 représente une vue partielle du dispositif et illustre notamment une vue plus en détail de moyens permettant de régler la position du détecteur de présence de câble,
la figure 5 représente une autre vue partielle du dispositif et illustre notamment une vue plus en détail de moyens permettant d'assurer un réglage du centre de gravité du dispositif,
les figures 6 et 7 illustrent le mécanisme intégré à l'interface de pose pour assurer la fermeture d'une pince de balise avifaune sur un câble, plus précisément les figures 6 et 7 représentent respectivement la pince en position ouverte et en position fermée sur un câble,
la figure 8 représente une vue latérale d'une pince de fixation d'une balise avifaune susceptible d'être utilisée dans le cadre de la présente invention,
les figures 9, 10 et 11 représentent la cinématique de déplacement de palettes de commande et leur interaction avec la pince de fixation, sous forme de trois étapes successives de cette cinématique,
les figures 12 et 13 représentent deux vues éclatées du dispositif, sous deux angles d'observation différents,
la figure 14 représente une variante de réalisation d'un dispositif conforme à un mode de réalisation de l'invention comprenant un deuxième détecteur de présence de câble,
la figure 15 illustre schématiquement un support élastique pour l'alignement sur un câble à fort dénivelé, et
les figures 16, 17 et 18 illustrent trois étapes successives de la pose d'une balise sur un câble, selon un mode de mise en oeuvre de la présente invention.

### DESCRIPTION DETAILLEE DE L'INVENTION

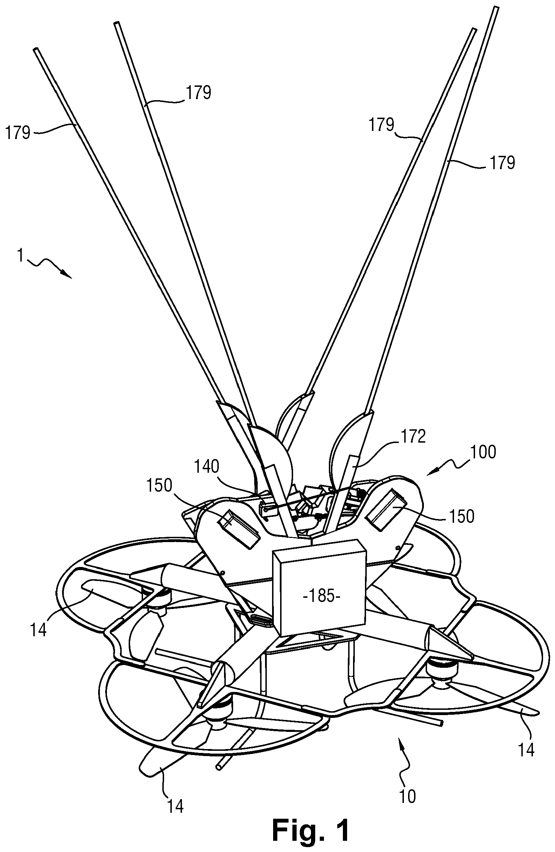

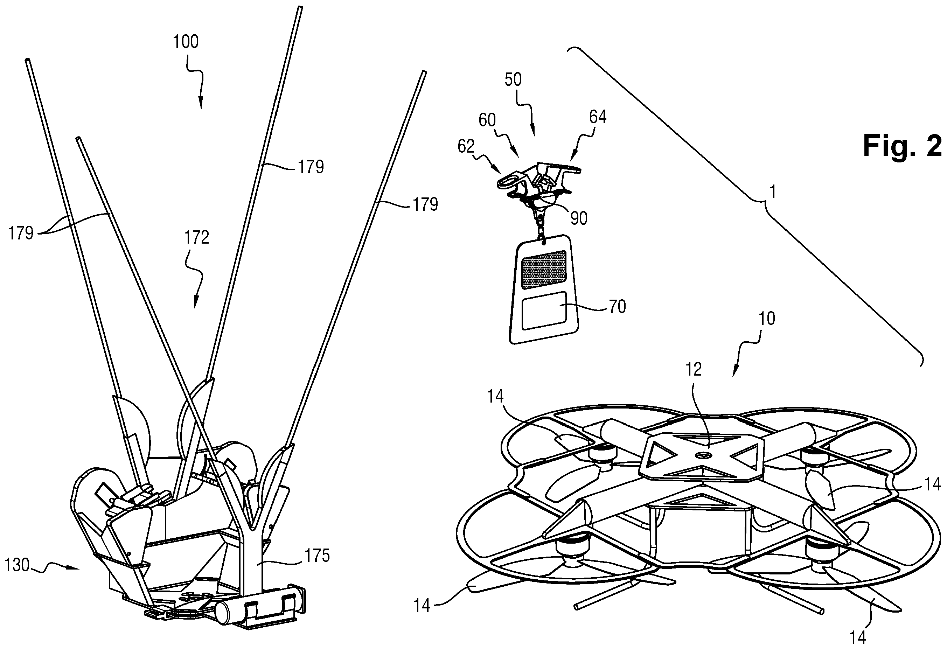

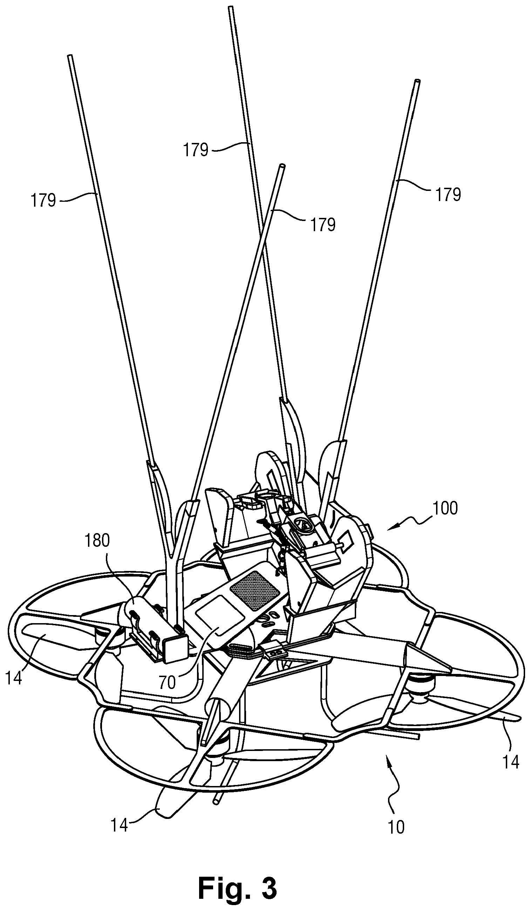

Le dispositif 1 conforme à un mode de réalisation de la présente invention, représenté notamment sur les figures 1, 2 et 3, comprend principalement trois éléments de base : un drone 10, une balise avifaune 50 et une interface de pose 100.

On entend par « interface de pose » 100 un ensemble porté par le drone 10 et adapté pour assurer la fixation de la balise 50 sur un câble C.

### Drone 10

On entend dans le cadre de la présente invention par « drone » 10 tout aéronef sans pilote embarqué, autonome, susceptible d'être piloté à distance, par exemple du type tri-rotor ou quadri-rotor.

Bien entendu un tel drone 10 est pourvu de préférence de tous les équipements classiques d'un drone piloté à distance, notamment gyroscope et caméra.

Dans le cadre de l'invention, le drone 10 utilisé doit être un drone permettant un vol stationnaire.

Le drone 10 est pourvu de préférence d'un plateau 12 adapté pour recevoir l'interface 100. Le plateau 12 est placé au sommet du drone et de préférence en position centrale sur celui-ci.

La configuration de ce plateau 12 doit être adaptée pour permettre de recevoir l'interface 100 sans interférer avec les hélices 14 du drone.

Le drone 10 doit être adapté pour ne pas risquer de perturbations sous l'effet du champ électromagnétique environnant, notamment le champ électromagnétique induit par le câble aérien C à protéger et qui est approché par le drone 10.

A cette fin, le drone 10 peut être muni de tout blindage approprié à l'égard du champ électromagnétique environnant.

Il peut par ailleurs être pourvu de tout moyen d'isolation électrique permettant d'opérer sans difficulté en contact avec un câble aérien sous tension.

La structure générale des drones est connue en soi de l'homme de l'art. Elle ne sera donc pas décrite plus en détail par la suite.

### Balise 50

La balise 50 peut faire l'objet de nombreux modes de réalisation.

Il s'agit de préférence d'une balise avifaune 50 munie d'une pince 60 comprenant deux mâchoires 62, 64 sollicitées vers une position de fermeture par des ressorts 90.

La balise avifaune 50 comporte par ailleurs une plaque 70 permettant aux oiseaux de visualiser la présence du câble C lorsque la balise est fixée sur ce câble C. Comme indiqué précédemment, une telle plaque 70 peut être formée d'une bande colorée, réfléchissante, lumineuse, luminescente, ou tout autre variante appropriée. La plaque 70 est reliée à la pince 60 par tous moyens appropriés pour laisser une certaine liberté de mouvement entre la plaque 70 et la pince 60, par exemple par l'intermédiaire d'une chaine ou d'un anneau.

On trouvera des exemples non limitatifs de réalisation de la plaque 70 dans le document WO 2006/011990 ou encore dans les documents US 4 597 357, US 2 722 195, US 3 085 545 et US 4 131 079.

La pince de fixation 60 de la balise 50 peut faire l'objet de nombreux modes de réalisation.

A titre d'exemple non limitatif, la pince de fixation 60 peut être conforme aux dispositions décrites et illustrées dans les documents SE 8300833 ou WO 2010/128929.

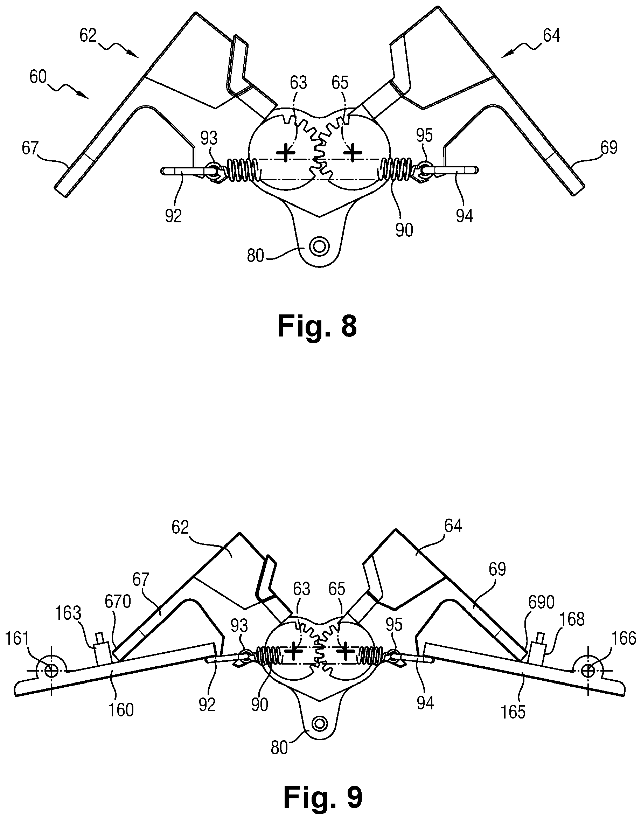

La figure 8 annexée est d'ailleurs extraite du document WO 2010/128929 pour illustrer un exemple de réalisation d'une balise avifaune utilisable dans le cadre de la présente invention.

### Pince 60 de fixation de la balise avifaune

On aperçoit sur les figures annexées, notamment sur les figures 8 à 11, une pince 60 de fixation d'une balise avifaune comprenant deux mâchoires 62, 64 montées à rotation autour d'axes respectifs 63, 65 sur une base 80.

Les deux axes 63 et 65 de rotation des mâchoires 62, 64 sont situés dans un plan commun horizontal 82 en utilisation normale de la balise 50.

Selon le mode de réalisation particulier et non limitatif illustré sur les figures annexées, les deux mâchoires 62 et 64 engrènent par l'intermédiaire de pignons respectifs 66, 68 en prise. Grâce à cet engagement des pignons 66 et 68 solidaires respectivement des mâchoires 62 et 64, ces deux mâchoires 62, 64 décrivent toujours un déplacement à rotation symétrique par rapport à un plan vertical central de la balise.

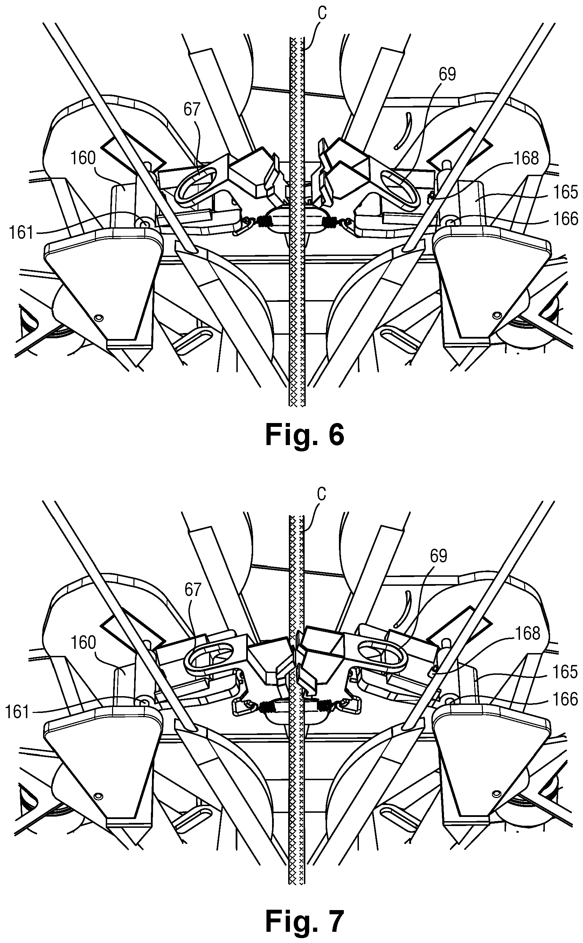

Au repos, en position ouverte, les deux mâchoires 62, 64 forment un dièdre en V ouvert vers le haut, pour recevoir un câble C, comme on le voit sur les figures 6, 8 et 9.

On voit sur les figures 8 à 11 que les mâchoires 62, 64 sont munies sur leur surface externe d'une ailette en forme d'anneau 67, 69, globalement transversale à la direction d'élongation des mâchoires 62, 64. Ces ailettes en forme d'anneau 67, 69 peuvent être utilisées pour appliquer un couple sur les mâchoires 62, 64 afin de les déplacer en position de fermeture.

La pince 60 comprend par ailleurs au moins un ressort 90, de préférence deux ressorts 90 disposés symétriquement de part et d'autre de la pince 60 et qui tendent à solliciter les mâchoires 62, 64 en position de fermeture. Les deux ressorts 90 sont donc parallèles entre eux.

Les ressorts 90 peuvent faire l'objet de nombreux modes de réalisation. Les ressorts 90 peuvent par exemple être formés chacun d'un ressort travaillant à la traction entre deux étriers 92, 94 eux-mêmes articulés respectivement sur les mâchoires 62, 64 autour d'axes 93, 95 situés radialement à l'extérieur des axes de rotation précités 63, 65 et eux même situés dans un plan 83 parallèle au plan 82 des axes de rotation 63, 65.

L'homme de l'art comprendra que lorsque le plan 83 qui correspond au plan de sollicitation par les ressorts 90 est situé en dessous du plan 82 des axes de rotation 63, 65, les mâchoires 62, 64 sont maintenues en position ouverte, comme illustré sur la figure 9.

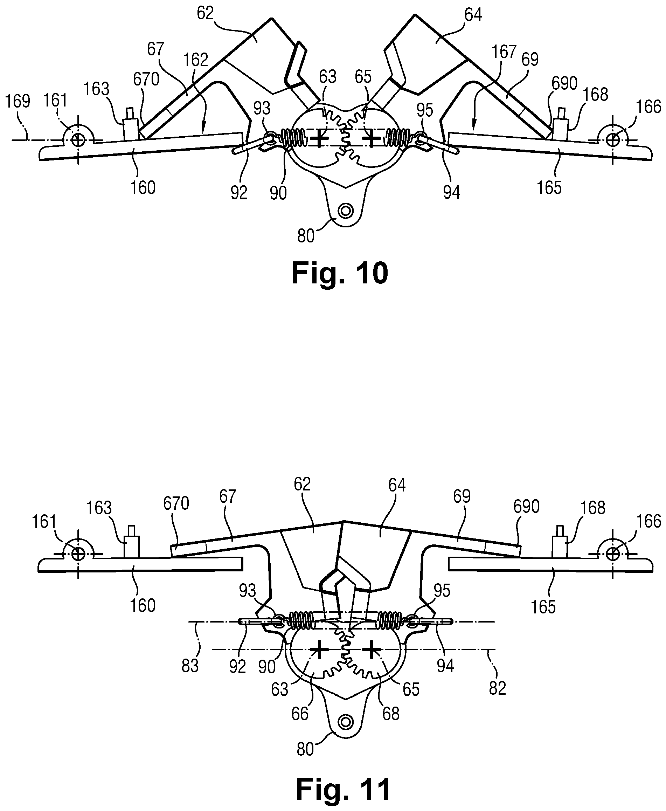

Lorsque le plan 83 qui correspond au plan de sollicitation par les ressorts 90 est situé au niveau du plan 82 des axes de rotation 63, 65, les mâchoires 62, 64 sont en position instable, prêtes à basculer en position de fermeture, comme illustré sur la figure 10.

Lorsque le plan 83 qui correspond au plan de sollicitation par les ressorts 90 est situé en dessus du plan 82 des axes de rotation 63, 65, les mâchoires 62, 64 sont sollicitées en position de fermeture comme illustré sur les figures 7 et 11.

### Moyens d'actionnement de la pince 60

L'interface de pose 100 conforme à la présente invention peut être munie de tout moyen approprié permettant de déplacer sur commande la pince 60 en position de fermeture, lorsque le détecteur de présence détecte un câble C entre les mâchoires 62 et 64.

Il peut s'agir par exemple de toute palette ou fourchette adaptée pour solliciter les mâchoires 62, 64 ou les ailettes en anneau 67, 69 qui leur sont liées.

Selon le mode de réalisation préférentiel illustré sur les figures annexées, les moyens de commande à la fermeture des mâchoires 62, 64 comprennent deux palettes 160, 165 articulées sur le châssis de l'interface 100 autour d'axes respectifs 161, 166. Les deux axes 161, 166 sont situés à une distance supérieure à l'encombrement de la balise 50. Ils sont situés dans un plan commun 169 horizontal en position d'utilisation normale et donc parallèle aux plans 82 et 83 précités.

Les palettes 160, 165 s'étendent essentiellement radialement vers l'intérieur de l'interface, à partir des axes de rotation 161 et 166.

Elles sont adaptées pour être entrainées sélectivement en rotation par des actionneurs respectifs 150, 152 eux-mêmes pilotés par un capteur de présence 140, lorsqu'un câble C est détecté entre les mâchoires 62 et 64.

Les palettes 160, 165 peuvent interagir selon différentes modalités avec les mâchoires 62, 64.

Selon le mode de réalisation particulier illustré sur les figures 9 à 11 annexées, les extrémités libres des palettes 160, 165 opposées aux axes de rotation 161, 166 sont adaptées pour être glissées sous les anneaux 67, 69 d'une balise 50, entre ces anneaux 67, 69 et les étriers 92, 94 servant de point d'accrochage aux ressorts 90.

Lors de l'installation d'une balise 50 dans l'interface 100, la balise 50 est ainsi placée entre les palettes 160, 165 et repose sur la surface supérieure des palettes 160, 165 par l'intermédiaire de ses ailettes en forme d'anneau 67, 69.

Les palettes 160, 165, lorsqu'elles sont entrainées par les actionneurs 150, 152, sollicitent les étriers 92, 94 et donc toute la pince 60 vers le bas, tandis qu'elles sollicitent les extrémités 670, 690 des ailettes 67, 69 inversement vers le haut. Cette double sollicitation tend à faire passer le plan 83 d'action des ressorts 90 au dessus du plan 82 passant par les axes de rotation 63, 65 des palettes 160, 165 et ainsi tend à solliciter les mâchoires 62, 64 vers leur position de fermeture.

Initialement comme on le voit sur la figure 9 les extrémités 670, 690 des ailettes 67, 69 sont situées sous le plan 82 des axes de rotation 63, 65.

L'on observera par ailleurs sur les figures 6, 7, et 9 à 11 que l'interface de pose 100 conforme à l'invention comprend sur la surface supérieure 162, 167 de chaque palette 160, 165, une saillie 163, 168, par exemple sous forme d'un pion, positionnée sur les palettes 160, 165 à une distance des axes de rotation 161, 166, telle que ces saillies 163, 168 viennent elles-mêmes solliciter les extrémités 670, 690 des ailettes 67, 69 lorsque ces extrémités ont dépassé vers le haut le plan 82 des axes de rotation 63, 65, par le jeu combiné du déplacement vers le bas de la pince, de la rotation initiée des mâchoires 62, 64 et de la rotation également amorcée des palettes 160, 165.

Ainsi l'appui des saillies 163, 168 sur les extrémités 670, 690 des ailettes 67, 69 vient également contribuer à la sollicitation des mâchoires 62, 64 en position de fermeture.

Par ailleurs, les saillies 163, 168 servent de centreur à la balise 50 dans l'interface, les saillies 163, 168 servant de butée aux extrémités 670, 690 des ailettes 67, 69.

### Structure générale de l'interface 100

L'interface 100 comprend de préférence un plateau inférieur 110 homologue du plateau 12 du drone. Ce plateau 110 qui sert de base à l'interface peut être fixé sur le plateau 12 du drone 10 par tout moyen approprié, par exemple à l'aide de pinces référencées schématiquement 112 sur les figures annexées.

En option, le plateau 110 peut être pourvu d'une rehausse 120. L'interface 100 comporte en partie supérieure de la rehausse 120, l'ensemble de pose 130 proprement dit et précédemment décrit assurant la commande de la pince 60 de la balise.

La réhausse 120 a de préférence la forme d'un entonnoir de forme pyramidale divergent et ouvert vers le haut pour recevoir une balise 50 par le haut.

La réhausse 120 peut porter deux chapes gauche 132 et droite 134 de l'ensemble 130, servant de support en articulation pour les palettes 160, 165.

### Capteur de présence 140

Comme on l'a indiqué précédemment, cet ensemble 130 comprend un capteur 140 de présence de câble ou de proximité de câble. Le capteur 140 peut faire l'objet de toute technologie connue de l'homme de l'art. Il ne sera donc pas décrit plus en détail par la suite.

Il peut s'agir par exemple, mais non limitativement, d'un capteur de proximité de type inductif basé sur la variation d'un champ magnétique à l'approche d'un objet conducteur du courant électrique, en l'espèce un câble C.

Il peut également s'agir comme illustré par exemple sur les figures annexées 4 et 14, d'un capteur mécanique, formé par exemple d'un simple interrupteur 142 dont l'organe d'actionnement est formé d'une tige souple 144 qui en position de repos s'étend à la base de l'espace formé entre deux branches 176, 177 d'un guide 175 qui sera décrit plus en détail par la suite. La tige 144 s'étend ainsi sur le trajet que doit couper le câble lors de l'approche du dispositif de pose de la balise. La tige 144 est déplacée par le câble C lorsque le drone 10 finalise l'approche du câble et positionne la pince 60. L'interrupteur 142 commute alors pour piloter les actionneurs 150.

Le capteur 140 est positionné dans l'interface à un emplacement, par exemple sur une joue de la rehausse 120 ou une chape 132 ou 134 de l'ensemble 130, adapté pour détecter la présence d'un câble C lorsqu'un tel câble C est placé entre les deux mâchoires 62, 64.

Le capteur 140 est propre à générer un signal de détection représentatif de la présence et/ou de l'absence du câble. Par exemple, dans le cas où le capteur 140 est un interrupteur 142, celui-ci est propre à passer d'une position ouverte à une position fermée lorsqu'il est actionné par la tige souple 144. Lorsque l'interrupteur 142 est en position ouverte, il ne génère pas de signal électrique. Lorsque l'interrupteur 142 est en position fermée, il génère un signal électrique représentatif de la présence du câble.

### Moyens de réglage de la position du capteur de présence 140

Le capteur 140 est de préférence monté libre de réglage en position sur l'interface. Pour cela, le support du capteur 140 peut être réalisé à l'aide d'une lumière oblongue incurvée référencée 143 sur les figures annexées.

Le déplacement du capteur 140 le long de la lumière incurvée 143 permet de régler la hauteur de la tige 144 dans le dièdre de guidage associé 172 ou 175, et par conséquent d'adapter le dispositif de pose au diamètre du câble concerné en ajustant l'instant de commande des actionneurs 150, 150 en fonction du diamètre du câble.

Le réglage de la position du capteur 140 permet notamment d'adapter l'instant de fermeture de la pince de la balise sur le câble au moment opportun en fonction du diamètre du câble considéré. Sans un tel réglage en effet, la fermeture de la pince de la balise pourrait s'effectuer trop tôt pour les plus grosses sections ou trop tard pour les plus petites sections.

Typiquement des essais ont montré que la présente invention permet aisément une pose de balise avifaune sur des câbles HTA allant de 22mm² à 148mm².

### Actionneur

L'ensemble de pose 130 comprend par ailleurs au moins un actionneur 150 piloté par le capteur de présence 140 pour entrainer les palettes 160, 165.

Plus précisément, l'ensemble de pose 130 comprend un module de commande 185 configuré pour recevoir le signal de détection généré par le capteur 140 et pour générer un signal de commande pour commander l'actionneur 150, en fonction du signal de détection. Le module de commande 185 peut inclure une carte électronique. La carte électronique est raccordée électriquement d'une part à une sortie du capteur 140 et d'autre part une entrée de l'actionneur 150.

L'actionnneur 150 est commandé par le module de commande de sorte que l'actionneur 150 ferme la pince 60 de la balise 50 sur le câble, lorsque le câble est détecté par le capteur 140.

Plus précisément, l'interface conforme à un mode de réalisation de la présente invention comprend de préférence deux actionneurs 150, 152 pilotés par le capteur 140 et adaptés pour entrainer respectivement l'une des palettes 160, 165.

Chaque actionneur 150 est de préférence formé d'un servo-moteur adapté pour actionner l'une des palettes 160, 165 montées à rotation autour des axes 161, 166 et adaptées pour solliciter, lorsqu'elles sont activées par le servo-moteur 150 à la fois les ressorts 90 de la balise et les mâchoires 62, 64 de la pince afin de refermer cette pince sur un câble aérien détecté, comme indiqué précédemment.

Les actionneurs 150, 152, comme le capteur 140, peuvent être fixés sur une joue de la rehausse 120 ou sur une chape 132 ou 134 de l'ensemble 130.

### Moyens de centrage du dispositif sur le câble

L'interface 100 comprend des moyens 170 adaptés pour assurer un centrage du dispositif sur un câble C, lorsque le drone 10 est en approche de celui-ci.

Plus précisément, il est prévu de préférence, respectivement sur deux côtés opposés en direction longitudinale du dispositif un guide large 172 et un guide fin 175.

Chacun des guides 172, 175 est de préférence formé d'une fourche à deux branches 173, 174 et 176, 177 en dièdre en V ouvert vers le haut. Les deux guides respectivement large et fin 172, 175, se distinguent par l'angle d'ouverture, plus large pour le guide large 172. Typiquement l'angle d'ouverture du guide large 172 est compris entre 55° et 35°, par exemple de l'ordre de 45°. L'angle d'ouverture du guide fin 175 est typiquement compris entre 40° et 20°, par exemple de l'ordre de 30°. Plus précisément encore comme on le voit sur les figures annexées, de préférence les moyens de centrage 170 comprenant les guides comprennent chacun une structure de base rigide en V 172, 175 comprenant typiquement deux ailes 173, 174 et 176, 177 surmontées de tiges ou prolongateurs 179.

Les prolongateurs 179 permettent d'allonger la longueur des guides c'est-à-dire le champ d'action des moyens de guidage. Le dispositif conforme à un mode de réalisation de l'invention est en effet ainsi guidé pour se centrer sur le câble C dès lors que l'un au moins des prolongateurs 179 prend appui sur le câble C par sa surface interne dirigée vers l'intérieur du dièdre de guidage en V.

Ainsi, les guides 172, 175 sont agencés pour guider le drone 100 relativement au câble C jusqu'à ce que le câble C se trouve engagé dans les deux guides 172, 175. Cela permet d'assurer une position correcte du drone 10 par rapport au câble C, c'est-à-dire une position dans laquelle le câble C est disposé entre les deux mâchoires 62, 64 de la pince 60 de la balise 50. Dans cette position, l'actionnement de la pince 60 vers la position fermée a pour résultat de fixer la balise 50 sur le câble C.

Il est à noter que du fait de l'orientation vers le haut des guides 172, 175, le drone se trouve sous le câble lorsque le drone 10 a atteint la position correcte.

De préférence, il est prévu des structures de came arrondie 190 au niveau de la liaison entre les V de base 172, 175 et les prolongateurs 179 pour éviter toute épaulement au niveau de cette zone de liaison, susceptible de former un arrêt ou butée au câble lors du déplacement relatif d'approche entre le drone 10 et le câble C.

### Moyens de réglage de la position du centre de gravité du dispositif

De préférence le dispositif conforme à la présente invention comprend des moyens permettant de régler la position de son centre de gravité. De tels moyens de réglage peuvent être formés par exemple par des moyens autorisant le réglage en position d'un sous ensemble du dispositif, par exemple d'un boîtier 180 logeant des moyens d'alimentation électrique.

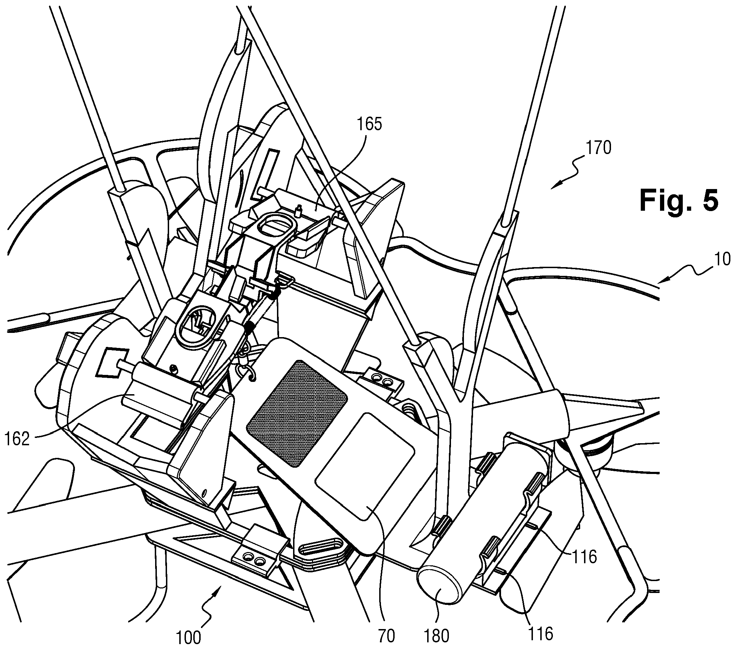

Pour cela, le boîtier 180 peut être fixé sur l'interface 100 à l'aide de glissières rectilignes. On aperçoit de telles glissières sous la référence 116 sur la figure 5 notamment. Les deux glissières 116 représentées sur la figure 5 sont parallèles entre elles. Elles s'étendent dans une direction globalement radiale par rapport au centre du dispositif. Ainsi en éloignant le boitier 180 du centre du dispositif on éloigne la masse de ce boitier 180 du centre du dispositif. Inversement en rapprochant le boitier 180 du centre du dispositif on rapproche la masse de ce boitier 180 du centre du dispositif.

### Moyens d'adaptation à un fort dénivelé

Le dispositif conforme à l'invention a vocation à poser des balises avifaunes 50 sur des câbles C à fort dénivelé.

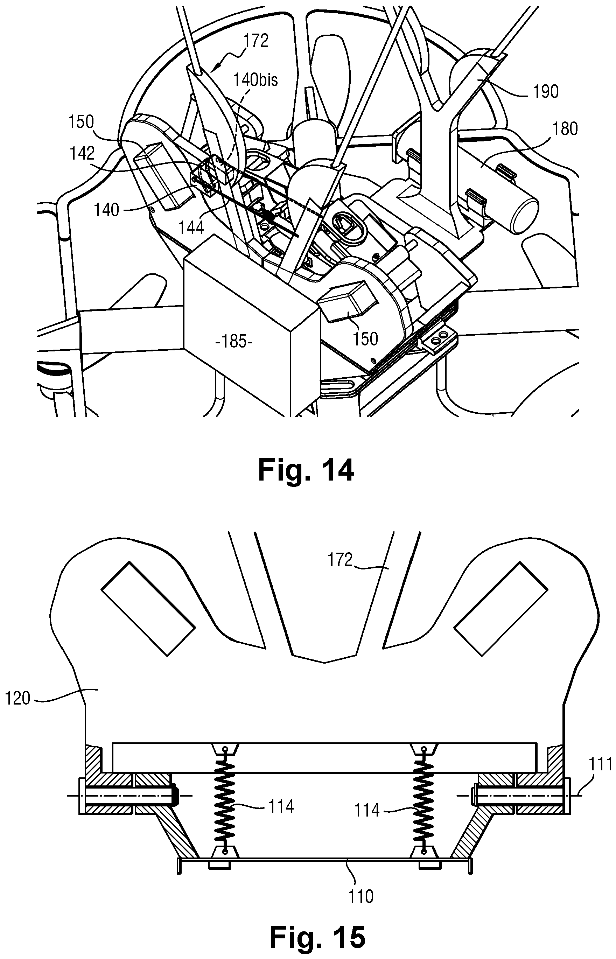

Pour ne pas perturber le vol des drones 10 qui doivent de préférence rester en position générale horizontale lors d'un vol stationnaire, il peut pour cela être prévu un module élastique, tel qu'illustré sur la figure 15, adapté pour être intercalé par exemple entre le plateau 110 de base et le corps 120 de l'interface pour autoriser un certain débattement élastique entre le plateau 110 et le corps 120 et ainsi permettre une inclinaison du corps 120 devant s'adapter à l'inclinaison du câble C tout en permettant au plateau 110 et donc au drone 10 de rester horizontal. On a schématisé sur la figure 15 un corps d'interface 120 articulé à rotation sur le plateau 110 autour d'un axe 111 et des moyens élastiques 114 intercalés entre le plateau 110 et le corps 120 de l'interface pour rappeler le corps 120 dans une position générale horizontale par rapport au plateau 110.

Grâce à cette disposition, lorsque le drone se plaque sur une ligne électrique avec un dénivelé prononcé, l'interface 100 peut s'incliner naturellement indépendamment du drone 10.

### Deuxième capteur de présence

Comme on l'a illustré sur la figure 14 on peut prévoir un deuxième capteur de présence ou de proximité 140bis installé sur le deuxième guide de conducteur 175 pour permettre de garantir que l'interface soit bien parallèle au câble C lorsqu'elle déclenche la fermeture de la pince 60 sur le câble C.

Un tel deuxième capteur de présence peut en particulier être utile en cas de pose d'une balise sur un câble en dénivelé.

Dans ce cas, chaque capteur 140, 140bis est adapté pour générer un signal de détection représentatif de la présence et/ou de l'absence du câble. Le module de commande 185 est configuré pour recevoir les signaux de détection générés par les deux capteurs 140, 140bis et pour générer un signal de commande de l'actionneur pour commander l'actionneur de telle sorte que l'actionneur actionne la pince 60 de la balise 50, uniquement lorsque le câble est détecté simultanément par les deux capteurs 140, 140bis.

### Autres éléments de structure

Le dispositif conforme à la présente invention comprend des moyens d'alimentation électrique, par exemple une batterie ou un ensemble de piles.

Typiquement, le dispositif conforme à la présente invention comprend une alimentation électrique formée de piles lithium de 3,7 volts pouvant être remplacées le cas échéant par une batterie.

Le dispositif conforme à un mode de réalisation de l'invention comprend des moyens supports de la carte électronique de commande 185.

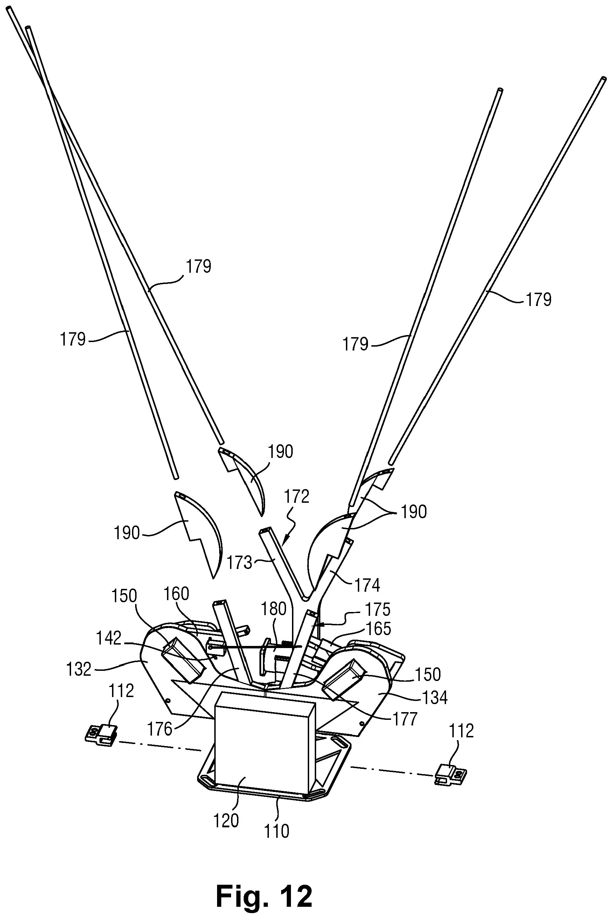

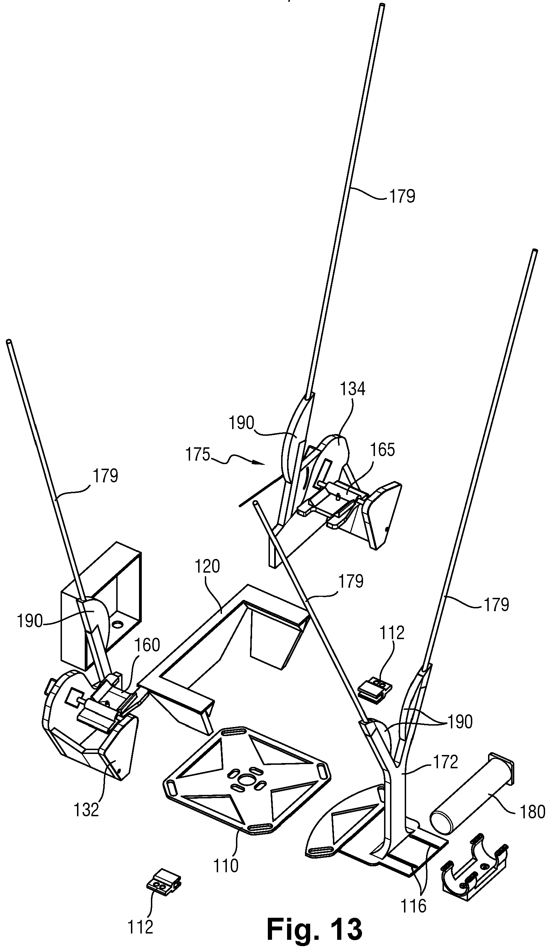

Les figures 12 et 13 représentent deux vues éclatées de l'interface 100 conforme à la présente invention.

On retrouve sur ces figures 12 et 13 les différents éléments constitutifs de l'interface 100 précédemment décrits.

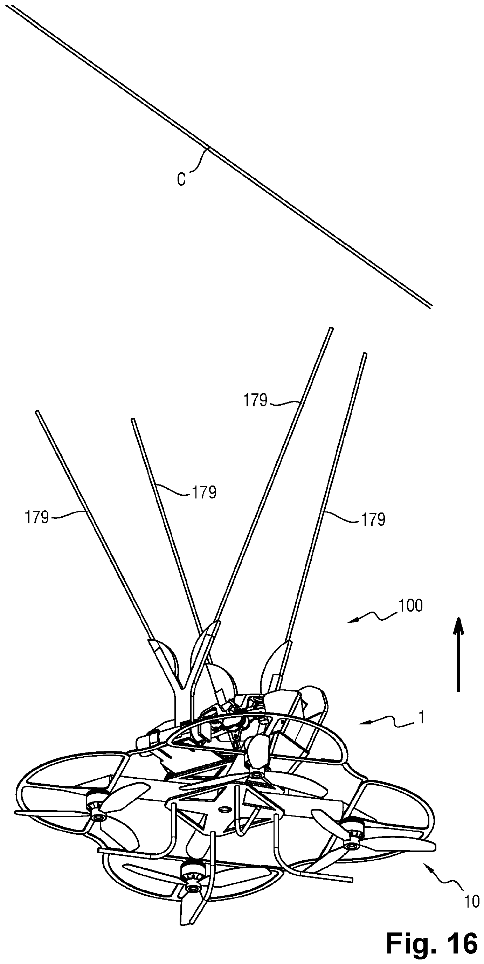

Les figures 16, 17 et 18 schématisent le procédé de pose de balises avifaunes conforme à la présente invention sur un câble C.

La figure 16 illustre un dispositif 1 conforme à la présente invention comprenant le drone 10, et une interface 100 équipée d'une balise 50 en position ouverte de sa pince 60, en approche d'un câble C. Le drone 10 est piloté par un opérateur pour s'aligner sous le câble C.

Le centrage de la pince 60 sur le câble C est facilité par les guides 172 et 175 qui en phase terminale de l'approche orientent le dispositif vers le câble C sous l'effet de la poussée par le drone 10.

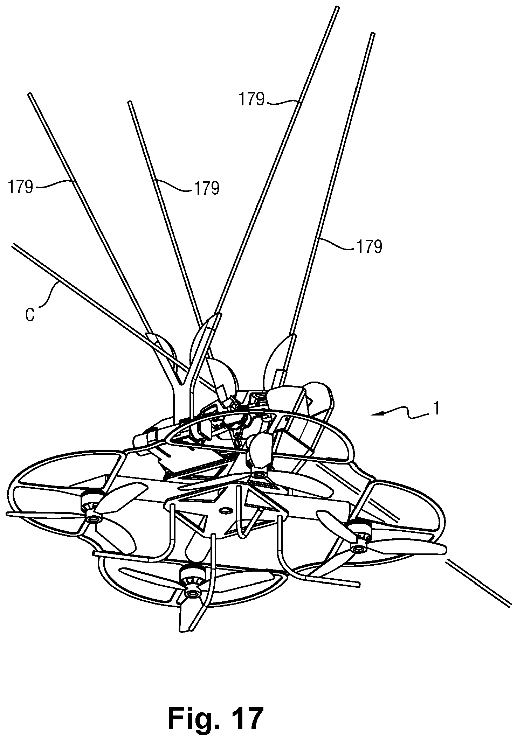

La figure 17 illustre le dispositif centré sur un câble C. Dans cette position la pince 60 encadre le câble C. Le capteur de présence 140 détecte la présence du câble et le module de commande 185 commande la fermeture de la pince 60, par l'intermédiaire des servo-moteurs 150 et des palettes 160, 165.

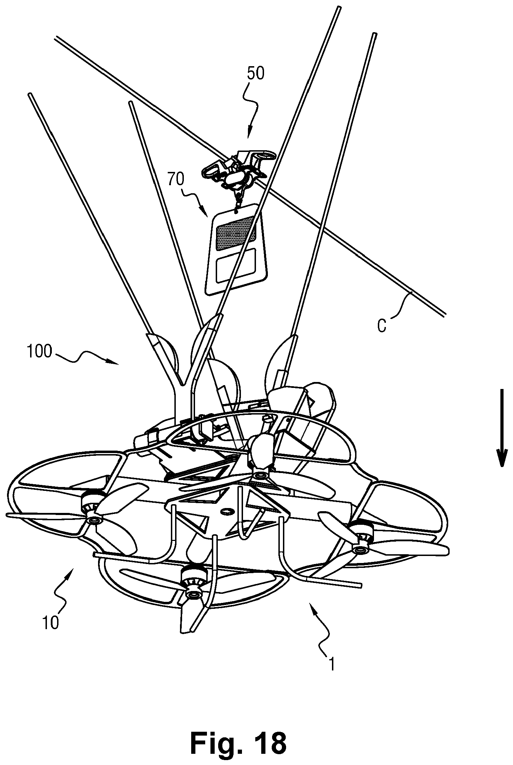

La figure 18 illustre l'éloignement consécutif du drone 10 et de l'interface 100, la balise 50 restant fixée sur le câble par la pince 60 maintenue en position de fermeture par les ressorts 90. Une fois la pince 60 refermée, la balise 50 peut en effet être séparée de l'interface 100 par simple éloignement de celle-ci vers le bas, induit par le drone 10. La pince 60 échappe en effet, en position de fermeture de la pince, à l'emprise des palettes 160, 165, par fléchissement élastiques si nécessaire des étriers 92, 94 de fixation des ressorts 90.

### Avantages de l'invention

L'interface conforme à l'invention est totalement autonome et peut s'adapter à n'importe quel drone dès lors que la puissance de celui-ci est suffisante pour porter l'interface 100.

De préférence, bien entendu, l'interface est réalisée en un matériau léger.

Typiquement l'envergure maximale du drone est de l'ordre de 60cm pour permettre de voler entre les conducteurs électriques.

Bien entendu la présente invention n'est pas limitée à la pose de balises avifaunes sur les lignes électriques.

La présente invention s'applique à la pose de balises avifaunes sur tout câble aérien, par exemple un câble de remontée mécanique.

La présente invention offre de nombreux avantages.

La présente invention permet notamment de résoudre les problèmes d'accessibilité sur des zones humides et montagnardes.

La présente invention permet une pose économique de balises avifaunes sur un câble.

La présente invention n'exige pas de personnel hyper spécialisé ni nombreux.

La présente invention offre une sécurité totale, notamment vis-à-vis des risques électriques.

La présente invention permet de maintenir la continuité de la fourniture d'électricité et donc d'assurer la satisfaction des utilisateurs connectés à un réseau électrique, puisqu'elle permet la pose de balises avifaunes sur les lignes électriques restant sous tension.

Les éléments constitutifs du dispositif de pose, au moins l'interface 100 et la balise 50, sont réalisés de préférence essentiellement en matériau électriquement isolant et très préférentiellement en matière plastique. Ceci permet d'éviter des perturbations lorsque le dispositif touche un câble sous tension.

La présente invention permet une totale autonomie des poseurs de balises avifaunes et une optimisation de la planification des chantiers de pose.

## Revendications

1. Dispositif de pose d'une balise avifaune sur un câble aérien comprenant :
- un drone (10) adapté pour transporter au moins une balise (50) et qui porte
- un détecteur de présence de câble (140),
- un module de commande (185), et
- au moins un actionneur (150) adapté pour actionner un système (60) de fixation de la balise sur le câble (C),
**caractérisé en ce que** le détecteur de présence de câble (140) est adapté pour générer un signal de détection représentatif de la présence et/ou de l'absence du câble, et le module de commande (185) est configuré pour recevoir le signal de détection et pour générer un signal de commande de l'actionneur pour commander l'actionneur (150), en fonction du signal de détection, de telle sorte que l'actionneur (150) actionne le système (60) de fixation de la balise (50) sur le câble (C) lorsqu'un tel câble est détecté par le détecteur de présence de câble (140).

2. Dispositif selon la revendication 1, **caractérisé par le fait que** l'actionneur est un servo-moteur (150).

3. Dispositif selon l'une des revendications 1 ou 2, **caractérisé par le fait qu'**il comprend au moins une palette de commande (160, 165) raccordée à l'actionneur (150).

4. Dispositif selon l'une des revendications 1 à 3, **caractérisé par le fait qu'**il comprend au moins une palette de commande (160, 165) configurée pour solliciter les mâchoires (62, 64) du système de fixation (60) en position de fermeture.

5. Dispositif selon l'une des revendications 1 à 4, **caractérisé par le fait qu'**il comprend deux palettes de commande (160, 165) raccordées à des actionneurs respectifs (150) et configurées pour solliciter respectivement l'une des mâchoires (62, 64) du système de fixation (60) de fixation en position de fermeture.

6. Dispositif selon la revendication 5, **caractérisé par le fait que** le dispositif comprend au moins un ressort (90) de sollicitation des mâchoires (62, 64) de la pince de fixation (60) et chaque palette (160, 165) est adaptée pour agir sur au moins l'un du ressort de fermeture (90) de la pince (60) et des mâchoires (62, 64) de la pince, de préférence à la fois sur ledit ressort (90) et lesdites mâchoires (62, 64).

7. Dispositif selon l'une des revendications 5 ou 6, **caractérisé par le fait que** chaque palette (160, 165) comprend une butée (163, 168) adaptée pour prendre appui sur un élément (67, 69) lié aux mâchoires (62, 64) de la pince de fixation (60), pour solliciter cette mâchoire en position de fermeture, lorsque le point d'appui entre la butée (163, 168) et ledit élément (67, 69) a franchi un plan (82) passant par les axes de rotation (63, 65) des mâchoires, sous la sollicitation de points d'appui d'au moins un ressort (90) par la palette (160, 165).

8. Dispositif selon la revendication 7, **caractérisé par le fait que** la butée (163, 168) placée sur chaque palette (160, 165) est configurée pour assurer un centrage de la balise (50) dans le dispositif de pose,

9. Dispositif selon l'une des revendications 1 à 8, **caractérisé par le fait qu'**il comprend au moins des moyens de centrage (170) adaptés pour adaptés pour guider le drone (10) relativement au câble jusqu'à une position relative du drone (10) par rapport au câble dans laquelle l'actionnement du système (60) de fixation de la balise (50) a pour résultat de fixer la balise (50) sur le câble,

10. Dispositif selon la revendication 9, **caractérisé par le fait que** les moyens de centrage (170) sont agencés de sorte que lorsque le drone (10) a atteint la position, le drone (10) se trouve sous le câble,

11. Dispositif selon l'une des revendications 9 et 10, **caractérisé par le fait que** les moyens de centrage (170) comprennent au moins un guide en V ouvert vers le haut.

12. Dispositif selon l'une des revendications 9 à 11, **caractérisé par le fait que** les moyens de centrage (170) par rapport au câble comprennent deux guides en V (172, 175) ouverts vers le haut et disposés sur des extrémités opposées du dispositif.

13. Dispositif selon l'une des revendications 9 à 12, **caractérisé par le fait que** les moyens de centrage (170) comprennent un guide fin (172) et un guide large (175).

14. Dispositif selon l'une des revendications 9 à 13, **caractérisé par le fait que** les moyens de centrage comprennent une came arrondie (190) garantissant que les moyens de centrage ne présentent pas d'épaulement formant butée au câble.

15. Dispositif selon l'une des revendications 1 à 14, **caractérisé par le fait qu'**il comprend des moyens de réglage du centre de gravité du dispositif.

16. Dispositif selon la revendication 15, **caractérisé par le fait qu'**il comprend une interface (100) supportant le détecteur de présence de câble (140) et que les moyens de réglage du centre de gravité comprennent des moyens de réglage d'un sous-ensemble de l'interface.

17. Dispositif selon l'une des revendications 1 à 16, **caractérisé par le fait qu'**il comprend des moyens de réglage de la position du détecteur de présence de câble (140) par rapport au drone (10).

18. Dispositif selon la revendication 17, **caractérisé par le fait que** les moyens de réglage comprennent une lumière incurvée (143) de fixation du détecteur (140).

19. Dispositif selon l'une des revendications 1 à 18, **caractérisé par le fait qu'**il comprend une interface (100) supportant le détecteur de présence de câble (140) et des moyens élastiques (114) adaptés pour être intercalés entre le drone (10) et la base de l'interface (100) pour permettre une adaptation aux câbles de fort dénivelé.

20. Dispositif selon l'une des revendications 1 à 18, **caractérisé par le fait qu'**il comprend deux détecteurs de présence de câble (140, 140bis) permettant notamment de piloter la fermeture d'une pince sur un câble en dénivelé.

21. Dispositif selon la revendication 20, **caractérisé par le fait que** chaque détecteur de présence de câble (140, 140bis) est adapté pour générer un signal de détection représentatif de la présence et/ou de l'absence du câble, et en ce que le module de commande (185) est configuré pour recevoir les signaux de détection et pour générer un signal de commande de l'actionneur pour commander l'actionneur, en fonction des signaux de détection, de telle sorte que l'actionneur actionne le système de fixation de la balise sur le câble, lorsque le câble est détecté à la fois par les deux détecteurs de présence (140, 140bis).

22. Procédé de pose d'une balise avifaune sur un câble aérien comprenant les étapes qui consistent à :
- transporter au moins une balise (50) à l'aide d'un dispositif selon les revendications 1-21,
- détecter la présence d'un câble (C) à l'aide du détecteur de présence de câble (140), le détecteur de présence de câble (140) étant adapté pour générer un signal de détection représentatif de la présence et/ou de l'absence du câble, et
- commander l'actionneur (150) par le biais du module de commande (185) qui reçoit le signal de détection et qui génère un signal de commande de l'actionneur pour commander l'actionneur (150), en fonction du signal de détection, de telle sorte à
- actionner un système de fixation (60) de la balise sur le câble (C), lorsqu'un tel câble est détecté par le détecteur de présence (140).

23. Procédé selon la revendication 22, **caractérisé par le fait que** la balise avifaune (50) est installée sur un câble électrique (C) sous tension.

## Patentansprüche

1. Vorrichtung zum Anbringen einer optischen Vogelabwehr auf einer Freileitung, die Folgendes umfasst:
- eine Drohne (10), die dazu angepasst ist, mindestens eine optische Abwehr (50) zu transportieren und die Folgendes trägt:
- einen Leitungsvorhandenseinsdetektor (140),
- ein Steuermodul (185), und
- mindestens ein Betätigungsorgan (150), das dazu angepasst ist, ein System (60) zur Befestigung der optischen Abwehr auf der Leitung (C) zu betätigen,
**dadurch gekennzeichnet, dass** der Leitungsvorhandenseinsdetektor (140) dazu angepasst ist, ein Detektionssignal zu erzeugen, das für das Vorhandensein und/oder das Nichtvorhandensein der Leitung repräsentativ ist, und das Steuermodul (185) dazu ausgestaltet ist, das Detektionssignal zu empfangen und ein Signal zur Steuerung des Betätigungsorgans zu erzeugen, um das Betätigungsorgan (150) in Abhängigkeit von dem Detektionssignal zu steuern, derart dass das Betätigungsorgan (150) das System (60) zur Befestigung der optischen Abwehr (50) auf der Leitung (C) betätigt, wenn eine solche Leitung durch den Leitungsvorhandenseinsdetektor (140) detektiert wird.

2. Vorrichtung nach Anspruch 1, **dadurch gekennzeichnet, dass** das Betätigungsorgan ein Servomotor (150) ist.

3. Vorrichtung nach einem der Ansprüche 1 oder 2, **dadurch gekennzeichnet, dass** sie ferner mindestens eine Steuerplatte (160, 165) umfasst, die an das Betätigungsorgan (150) angeschlossen ist.

4. Vorrichtung nach einem der Ansprüche 1 bis 3, **dadurch gekennzeichnet, dass** sie mindestens eine Steuerplatte (160, 165) umfasst, die dazu ausgestaltet ist, die Backen (62, 64) des Befestigungssystems (60) in der geschlossenen Position zu beanspruchen.

5. Vorrichtung nach einem der Ansprüche 1 bis 4, **dadurch gekennzeichnet, dass** sie zwei Steuerplatten (160, 165) umfasst, die an entsprechende Betätigungsorgane (150) angeschlossen sind und dazu ausgestaltet sind, jeweils eine der Backen (62, 64) des Befestigungssystems (60) zur Befestigung in der geschlossenen Position zu beanspruchen.

6. Vorrichtung nach Anspruch 5, **dadurch gekennzeichnet, dass** die Vorrichtung mindestens eine Feder (90) zur Beanspruchung der Backen (62, 64) der Befestigungsklammer (60) umfasst und jede Platte (160, 165) dazu angepasst ist, auf mindestens eines von der Schließfeder (90) der Klammer (60) und den Backen (62, 64) der Klammer, vorzugsweise gleichzeitig auf die Feder (90) und die Backen (62, 64), einzuwirken.

7. Vorrichtung nach einem der Ansprüche 5 oder 6, **dadurch gekennzeichnet, dass** jede Platte (160, 165) einen Anschlag (163, 168) umfasst, der dazu angepasst ist, auf einem Element (67, 69), das mit den Backen (62, 64) der Befestigungsklammer (60) verbunden ist, zur Anlage zu kommen, um diese Backe in der geschlossenen Position zu beanspruchen, wenn der Anlagepunkt zwischen dem Anschlag (163, 168) und dem Element (67, 69) eine Ebene (82), die durch die Drehachsen (63, 65) der Backen verläuft, unter der Beanspruchung von Anlagepunkten von mindestens einer Feder (90) durch die Platte (160, 165) überquert hat.

8. Vorrichtung nach Anspruch 7, **dadurch gekennzeichnet, dass** der Anschlag (163, 168), der auf jeder Platte (160, 165) platziert ist, dazu ausgestaltet ist, eine Zentrierung der optischen Abwehr (50) in der Anbringungsvorrichtung sicherzustellen.

9. Vorrichtung nach einem der Ansprüche 1 bis 8, **dadurch gekennzeichnet, dass** sie mindestens Zentrierungsmittel (170) umfasst, die dazu angepasst sind, dazu angepasst zu sein, die Drohne (10) in Bezug auf die Leitung bis zu einer relativen Position der Drohne (10) in Bezug auf die Leitung zu führen, in der die Betätigung des Systems (60) zur Befestigung der optischen Abwehr (50) als Ergebnis das Befestigen der optischen Abwehr (50) auf der Leitung aufweist.

10. Vorrichtung nach Anspruch 9, **dadurch gekennzeichnet, dass** die Zentrierungsmittel (170) derart gestaltet sind, dass, wenn die Drohne (10) die Position erreicht hat, die Drohne (10) sich unter der Leitung befindet.

11. Vorrichtung nach einem der Ansprüche 9 und 10, **dadurch gekennzeichnet, dass** die Zentrierungsmittel (170) mindestens eine Führung mit der Form eines nach oben offenen V umfassen.

12. Vorrichtung nach einem der Ansprüche 9 bis 11, **dadurch gekennzeichnet, dass** die Zentrierungsmittel (170) in Bezug auf die Leitung zwei nach oben offene V-förmige Führungen (172, 175) umfassen, die an entgegengesetzten Enden der Vorrichtung angeordnet sind.

13. Vorrichtung nach einem der Ansprüche 9 bis 12, **dadurch gekennzeichnet, dass** die Zentrierungsmittel (170) eine schmale Führung (172) und eine breite Führung (175) umfassen.

14. Vorrichtung nach einem der Ansprüche 9 bis 13, **dadurch gekennzeichnet, dass** die Zentrierungsmittel einen abgerundeten Nocken (190) umfassen, der sicherstellt, dass die Zentrierungsmittel keine Schulter aufweisen, die einen Anschlag für die Leitung bildet.

15. Vorrichtung nach einem der Ansprüche 1 bis 14, **dadurch gekennzeichnet, dass** sie Mittel zur Verstellung des Schwerpunkts der Vorrichtung umfasst.

16. Vorrichtung nach Anspruch 15, **dadurch gekennzeichnet, dass** sie eine Grenzfläche (100) umfasst, die den Leitungsvorhandenseinsdetektor (140) trägt, und dass die Mittel zur Verstellung des Schwerpunkts Mittel zur Verstellung einer Unterbaugruppe der Grenzfläche umfassen.

17. Vorrichtung nach einem der Ansprüche 1 bis 16, **dadurch gekennzeichnet, dass** sie Mittel zur Verstellung der Position des Leitungsvorhandenseinsdetektors (140) in Bezug auf die Drohne (10) umfasst.

18. Vorrichtung nach Anspruch 17, **dadurch gekennzeichnet, dass** die Verstellungsmittel eine gekrümmte Öffnung (143) zur Befestigung des Detektors (140) umfassen.

19. Vorrichtung nach einem der Ansprüche 1 bis 18, **dadurch gekennzeichnet, dass** sie eine Grenzfläche (100), die den Leitungsvorhandenseinsdetektor (140) trägt, und elastische Mittel (114) umfasst, die dazu angepasst sind, zwischen der Drohne (10) und der Basis der Grenzfläche (100) eingeschoben zu werden, um eine Anpassung auf Leitungen mit großem Höhenunterschied zu ermöglichen.

20. Vorrichtung nach einem der Ansprüche 1 bis 18, **dadurch gekennzeichnet, dass** sie zwei Leitungsvorhandenseinsdetektoren (140, 140bis) umfasst, die insbesondere das Lenken des Schließens einer Backe auf einer Leitung mit Höhenunterschied ermöglichen.

21. Vorrichtung nach Anspruch 20, **dadurch gekennzeichnet, dass** jeder Leitungsvorhandenseinsdetektor (140, 140bis) dazu angepasst ist, ein Detektionssignal zu erzeugen, das für das Vorhandensein und/oder das Nichtvorhandensein der Leitung repräsentativ ist, und dadurch, dass das Steuermodul (185) dazu ausgestaltet ist, die Detektionssignale zu empfangen und ein Signal zur Steuerung des Betätigungsorgans zum Steuern des Betätigungsorgans in Abhängigkeit von den Detektionssignalen zu erzeugen, derart dass das Betätigungsorgan das System zur Befestigung der optischen Abwehr auf der Leitung betätigt, wenn die Leitung gleichzeitig durch die zwei Vorhandenseinsdetektoren (140, 140bis) detektiert wird.

22. Verfahren zum Anbringen einer optischen Vogelabwehr auf einer Freileitung, das die Schritte umfasst, die aus Folgendem bestehen:
- Transportieren mindestens einer optischen Abwehr (50) mittels einer Vorrichtung nach Anspruch 1 bis 21,
- Detektieren des Vorhandenseins einer Leitung (C) mittels des Leitungsvorhandenseinsdetektors (140), wobei der Leitungsvorhandenseinsdetektor (140) dazu angepasst ist, ein Detektionssignal zu erzeugen, das für das Vorhandensein und/oder das Nichtvorhandensein der Leitung repräsentativ ist, und
- Steuern des Betätigungsorgans (150) mittels des Steuermoduls (185), welches das Detektionssignal empfängt und ein Signal zur Steuerung des Betätigungsorgans zum Steuern des Betätigungsorgans (150) in Abhängigkeit von dem Detektionssignal erzeugt, derart dass
- ein System (60) zur Befestigung der optischen Abwehr auf der Leitung (C) betätigt wird, wenn eine solche Leitung durch den Vorhandenseinsdetektor (140) detektiert wird.

23. Verfahren nach Anspruch 22, **dadurch gekennzeichnet, dass** die optische Vogelabwehr (50) auf einer unter Spannung stehenden Stromleitung (C) eingerichtet wird.

## Claims

1. Device for placing an avifauna beacon on an aerial cable comprising :
- a drone (10) adapted to carry at least one beacon (50) and which
carries
- a cable presence detector (140)
- a control module (185), and
- at least one actuator (150) adapted to operate a system (60)
for fixing the beacon to the cable (C),
**characterized in that** the cable presence detector (140) is adapted to generate a detection signal representative of the presence and/or absence of the cable, and the control module (185) is configured to receive the detection signal and to generate an actuator
actuator control signal to control the actuator (150), based on the detection signal, in such a
actuator (150), based on the detection signal, such that the actuator (150) actuates the system (60) for attaching the beacon (50) to the cable (C) when such a cable is detected by the cable presence detector (140) .

2. A device according to claim 1, **characterized in that**
the actuator is a servo motor (150).

3. A device according to one of claims 1 or 2, **characterized by** the fact that it comprises at least one control paddle (160, 165) connected to the actuator (150)

4. Device according to one of claims 1 to 3, **characterized in that**
that it comprises at least one control paddle (160, 165) configured to urge the jaws (62, 64) of the fastening system (60) into the closed position.

5. Device according to one of claims 1 to 4, **characterized by** the fact that it comprises two control paddles (160, 165) connected to respective actuators (150) and configured to respectively urge one of the jaws (62, 64) of the fastening system (60) into the closed position.

6. The device of claim 5, **characterised in that** the device comprises at least one spring (90) for biasing the jaws (62, 64) of the clamp (60) and each paddle (160, 165) is adapted to act on at least one of the closing spring
(90) of the clamp (60) and the jaws (62, 64) of the clamp, preferably both on said spring (90)
spring (90) of the clamp (60) and the jaws (62, 64) of the clamp, preferably on both said spring (90) and said jaws (62, 64).

7. Device according to one of claims 5 or 6, **characterized in that** each pallet (160, 165) comprises a stop (163, 168) adapted to bear on an element (67, 69) connected to the jaws (62, 64)
of the fixing clamp (60), in order to urge this jaw into the closed position, when the
the bearing point between the stop (163, 168) and said element (67, 69) has passed a plane (82) passing through the axes of rotation (63, 65) of the jaws, under the stress of bearing points of at least one spring (90) by the vane (160, 165).

8. A device according to claim 7, **characterized in that** the stop
(163, 168) placed on each pallet (160, 165) is configured to
centering the beacon (50) in the placement device.

9. Device according to one of claims 1 to 8, **characterized by** the fact that it comprises at least centering means (170) adapted to
adapted to guide the drone (10) relative to the cable to a
position of the drone (10) relative to the cable in which the actuation of the system (60) for fixing the beacon (50) results in fixing the beacon (50) on the cable.

10. Device according to claim 9, **characterized by** the fact that the
centering means (170) are arranged such that when the drone
(10) has reached the position, the drone (10) is under the cable.

11. A device according to any of claims 9 and 10, **characterized by** the fact that the centering means (170) comprise at least one upwardly open V-guide.

12. Device according to one of claims 9 to 11, **characterized in that**
that the centering means (170) with respect to the cable comprise two upwardly open V-guides (172, 175) arranged on opposite ends of the device.

13. A device according to any of claims 9 to 12, **characterized in that** the centering means (170) comprise a fine guide (172) and a wide guide (175).

14. Device according to one of claims 9 to 13, **characterized in that**
that the centering means comprise a rounded cam (190) ensuring that the
ensuring that the centering means do not have a shoulder forming a stop for the cable.

15. Device according to one of claims 1 to 14, **characterized by** the fact that it comprises means for adjusting the center of gravity of the device.

16. The device of claim 15, **characterized in that** it comprises an interface (100) supporting the cable presence sensor (140) and that the means for adjusting the center of gravity comprises means for adjusting a subassembly of the interface.

17. Device according to one of claims 1 to 16, **characterized by** the fact that
that it comprises means for adjusting the position of the cable presence detector (140) with respect to the drone (10).

18. Device according to claim 17, **characterized by** the fact that the adjustment means comprise a curved slot (143) for fixing of the detector (140)..

19. Device according to one of claims 1 to 18, **characterized by** the fact that it comprises an interface (100) supporting the cable presence detector (140) and elastic means (114) adapted to be interposed between the UAV (10) and the base of the interface (100) to allow for adaptation to cables with high gradients.

20. Device according to one of claims 1 to 18, **characterized by** the fact that it comprises two cable presence detectors (140, 140bis) making it possible, in particular, to control the closing of a clamp on a sloping cable.

21. A device according to claim 20, **characterized in that**
each cable presence detector (140, 140bis) is adapted to generate a detection signal representative of the presence and/or absence of the cable, and **in that** the control module (185) is configured to receive the detection signals and to generate an actuator control signal
actuator control signal to control the actuator, in accordance with the
signals, such that the actuator actuates the beacon attachment system on the cable, when the cable is detected by both presence detectors (140, 140bis).
is detected by both presence detectors (140, 140bis).

22. A method of installing an avifauna beacon on an overhead cable comprising the steps of :
- transporting at least one beacon (50) by means of a device according to claims 1-21,
- detecting the presence of a cable (C) with the cable presence detector (140), the cable presence detector (140) being adapted to generate a detection signal representative of the presence and/or absence of the cable, and
- controlling the actuator (150) via the control module (185) which receives the detection signal and generates an actuator control signal for controlling the actuator (150), based on the detection signal, so as to
- actuate a system for securing (60) the beacon to the cable (C),
when such a cable is detected by the presence detector (140).

23. Method according to claim 22, **characterized by** the fact that the avifauna beacon (50) is installed on a live electric cable (C).
